# EUROPEAN PATENT SPECIFICATION

(11) **EP 2 498 985 B1**
(45) Date of publication and mention of the grant of the patent: **15.06.2016**
(21) Application number: 10829384.6
(22) Date of filing: 16.08.2010
(51) Int. Cl.: B32B 3/10

(54) **A PACKAGE FOR PAPER SHEETS**
VERPACKUNG FÜR PAPIERBÖGEN
EMBALLAGE POUR FEUILLES DE PAPIER

(30) Priority: 12.11.2009 BR MU8902517 U
(43) Date of publication of application: 19.09.2012
(73) Proprietor: Papéis Amália Ltda, 13031-695 Campinas - SP (BR)
(72) Inventor: TERUEL, Nelson, Luís, Bertazzo, 13278-141 Valinhos - SP (BR)
(74) Representative: V.O.
(86) International application number: PCT/BR2010/000267
(87) International publication number: WO 2011/057368

(56) References cited:
- DE-A1- 2 408 287
- US-A1- 2009 081 405
- US-A1- 2009 081 451
- US-B1- 6 214 766
- US-B1- 6 423 420

## Description

The object of the instant invention is a package for paper sheets, which was configured to provide increased efficiency and usability over the similar packages usually employed to the artwork.

Paper sheets for use in offices, and preferably intended for the provision of copies of electro-photographic, laser, mono ink jet", planar fax, color or monochromatic offset types and the like, are supplied to the consumer market in various sizes and preferably in the form of reams (500 sheets) accommodated in an adequate packaging means in order to, among others, avoid exposure of the sheets to moisture that might compromise and/or hinder the use thereof.

In its usual form, that type of package is substantially comprised by a bi-oriented polypropylene (BOPP) sheathing which constitutes an element intended to provide resistance and fluid-tightness, preferably laminated with paper or one other pearlized bi-oriented polypropylene (BOPP), which acts as a body-forming element, allowing due machine workability in the packaging process.

In its usual form, notwithstanding the fact that such type of package is adequate for the purpose that it is intended to achieve, there may be ascribed thereto some inconvenient aspects: In the case of lamination of bi-oriented polypropylene (BOPP) with paper, the material is not recyclable due to the fact that the cost of such operation is high and totally inadequate in terms of the ideal cost-benefit relationship of the end material(s) thus obtained. In the case of lamination of bi-oriented polypropylene (BOPP) with one other pearl film cavitated bi-oriented polypropylene (Pearl BOPP), there occur two inconvenient aspects: The package is heat-sealed and its two component films fuse together to the point of rendering impossible opening the package without destroying the package risking injure to the hands or breaking nails of users, in addition to the fact that the association of those two films of different molecular densities, specific weights and different degrees of flexibility causes undesired effects derived from variation of the ambient temperature and the tension of the lamination with adhesives at the time of production and during the use thereof in the process of packaging of the paper sheets, thereby causing losses to the paper manufacturers due to the slowing down of the packaging velocity, and also due to constant downtime (interruptions in the process) arising from the deleterious effect known as "bowing" or "curling" which causes the laminated paper to lose its flat condition and develop a tendency to deform its surface in upward or downward deflection, hindering the passage thereof through, and use in, the paper sheet packaging machine.

Due to such fact, the paper sheets accommodated in this type of package have been subject to restriction in a number of markets, particularly those more engaged in the preservation of the environment, which constitutes an undesirable problem for the papermaking industry.

Having these aspects in consideration and with a view to overcoming the problems involved therein, there was developed the packaging arrangement for paper sheets that constitutes the object of the present invention, which construction and advantages will be better evidenced in the detailed description provided below herein and in the drawings attached hereto, wherein:
In Fig. 1 there is shown a view of a package obtained in accordance with the present invention and a partial cross section view intended for better understanding thereof; and
In Figs. 2 and 3 there are depicted cross-sectional views of other possible embodiments of the package.

In accordance with what is depicted in the above listed figures, the package that constitutes the object of the present invention is intended for accommodating paper sheets for office use, that can have different sizes and may be used for obtaining copies of the electro-photographic, laser, "mono ink jet", planar fax, color or monochromatic offset types, or the like.

These sheets, as mentioned, are currently supplied to the consumers in various sizes and preferably in the form of reams (500 sheets), substantially by a sheathing 1 obtained from a sheet of material in laminate form, adequately cut, folded and glued or sealed.

This sheathing is usually substantially built in the form of a bi-oriented polypropylene (BOPP) sheathing, acting as a strengthening and waterproofing element, preferably laminated with paper or with one other pearlized bi-oriented polypropylene (BOPP pearl), as usually constructed.

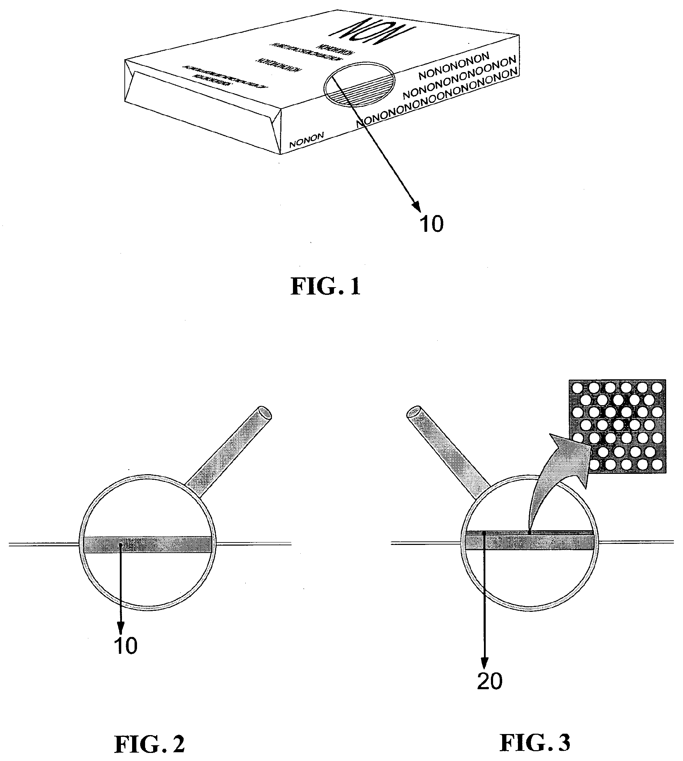

In the present invention the sheathing (Fig. 1) is substantially obtained from a single film 10 of bi-oriented polypropylene, transparent or colored, glossy or opaque, and co-extruded with outer layers of the same plastic resin (Polypropylene), especially modified and provided with additives for low-temperature fusion (BOPP-LT), which receive flexographic printing microdots or rotogravure printing microdots, with determined size and shape, for controlling the sealability of the film upon closure of the package, for the provision of easier opening of the paper sheet package without causing the destruction of the package and the undesirable risks of injury to the hands of the users of the paper sheets. The microdots printing process, as well as the film, are particularly selected to act as a further strengthening element, for obtainment of the paper sheets in packaged form and waterproofed for protection thereof against moisture.

This form of construction of the package provides, while in use, the properties of water tightness and mechanical strength, an easier opening of the package and also a controlled planarity of the film component in order to avoid the undesirable effects of "bowing" or "curling" of the packaging film during the production of the sheet packages, such properties being quite superior to those of an usual package.

This form of construction of the package provides an excellent operation in modem packaging machines in the papermaking and paper packaging industries, as its polymers and additives render the same more compliant in terms of machinability, allowing thermal welding with low temperature and high packaging velocity. One important aspect is the total control of the coefficient of friction (COF) of the "BOPP-LT" film, which warrants to that new form of construction a very stable performance for each different type or make of packaging machine.

One other important aspect of this package consists in the fact that the "BOPP-LT" films are especially modified and provided with additives for allowing an easier opening by the final user, with the aid of the sealability control that is obtained by means of the use of the printed microdots of thermal adherence of different shapes and sizes, without causing injuries to the hands or breaking of fingernails, and also avoiding the destruction of the package by tearing the same apart, with the consequent exposure of the paper sheets to moisture in the case of only partial use of the paper ream.

One other aspect worth being pointed out relates to the fact that the present package evidences good printability, which together with the visual characteristics of the material itself, favors the provision of a good visual appearance to the product, which is extremely desirable.

On the other hand, one other advantage obtained with the present invention, after the use thereof, resides in the fact that the same is recyclable using technically simple means and at a cost which is adequate to the ideal cost-benefit relationship of the thus obtained final product(s).

Within the basic concept described above, it is hereby claimed that the package might be subject to modifications with regard to the material thereof without such fact constituting any deviation from the scope of protection of the patent.

In that context, the package should always be comprised by one sole layer of film 10 of bi-oriented polypropylene, either transparent or color-tinted, glossy or opaque, and co-extruded with outer layers of the same plastic resin (Polypropylene), especially modified and provided with additives for fusion at low temperature (BOPP-LT), that are provided with flexographic or rotogravure printing of microdots, of a given size and shape, for controlling the sealability of the film upon closure of the package, aiming at achieving an easier opening of the paper sheet package, without causing the destruction of the package and the deleterious risks of injuries to the hands of the paper sheet users (Fig. 2) in order to obtain an adequate mechanical strength for withstanding the strains to which the package is subjected until the opening thereof.

The constructive material for the package with the essential characteristics described above is obtained by using the same means generally used in the industry of plastic films for packaging applications, and constitutes a film belonging to a later and more modem generation than the BOPP films employed in the usual packages.

The procedures for formation of the package around the paper ream are usual:
The package having been obtained includes insertions used for labeling purposes.

As will be logically understood, the present package may be used to accommodate quantities of paper sheet other than a ream, whereby it will have adequate dimensional characteristics.

The accommodated paper sheets may be of any of the sizes normally used in offices, homes, graphic centers, and the like, where in each case the package will evidence the correspondingly adequate dimensional characteristics.

## Claims

1. A package for paper sheets, such sheets intended to be used in offices, homes, graphic centers, and the like, that may that may have different sizes and may be used for obtaining various types of copies and the like, the said package being substantially comprised by a sheathing (1) obtained from non-laminated material, adequately cut, folded and thermally sealed, the said package being **characterized by** being substantially comprised by one sole layer of film (10) of bi-oriented polypropylene, transparent or colored, glossy or opaque, and co-extruded with two or more outer layers of the same plastic resin (Polypropylene), especially modified and provided with additives for fusion at low temperature (BOPP-LT), that receive a flexographic impression or rotogravure impression of microdots, of determined shape and size.

2. A package for paper sheets, as claimed in claim 1, **characterized by** being opened in a controlled manner, always using the technique of limitation of the thermal welding with the application of printed figures, round or ovate, triangular, square, or polygonal with four or more faces, regular or irregular, of various sizes, and with different amounts or spacings between the figures, in accordance with the strength constraints of the thermal welding and of the graphic design used for printing of propaganda on the package.

3. A package for paper sheets, as claimed in claim 1, **characterized by** receiving a flexographic or rotogravure printing on the inner face thereof, on the outer face thereof, or on both faces, in accordance with the printing graphic design of the client that packages the paper sheets, and in accordance with the applicable country's environmental legislation.

4. A package for paper sheets, as claimed in claim 1, **characterized in that** the packager of the paper sheets uses different packaging machine models, which may operate at different temperatures and different thermal welding velocities.

5. A package for paper sheets, as claimed in claim 1, **characterized by** accommodating any adequate amounts of paper sheets, other than a ream.

## Patentansprüche

1. Verpackung für Papierbögen, wie etwa Bögen, bestimmt zur Verwendung in Büros, Haushalten, Grafikzentren und dergleichen, die verschiedene Größen haben können und verwendet werden können, um verschiedene Arten von Kopien und dergleichen zu erhalten, die Verpackung bestehend im Wesentlichen aus einer Umhüllung (1), erhalten von nichtlaminiertem Material, passend geschnitten, gefaltet und wärmeversiegelt, die Verpackung **dadurch gekennzeichnet, dass** sie im Wesentlichen aus einer einzigen Schicht Folie (10) aus bi-orientiertem Polypropylen, transparent oder farbig, glänzend oder opak, und co-extrudiert mit zwei oder mehr Außenschichten desselben Kunststoffharzes (Polypropylen), speziell modifiziert und versehen mit Zusatzstoffen zum Fusionieren bei niedriger Temperatur (BOPP-LT), besteht, die einen Flexoaufdruck oder einen Rotogravuraufdruck aus Mikropunkten von bestimmter Form und Größe erhalten.

2. Verpackung für Papierbögen nach Anspruch 1, **dadurch gekennzeichnet, dass** sie auf kontrollierte Weise geöffnet wird, immer unter Verwendung der Technik der Begrenzung der Wärmeverschweißung mit der Anwendung gedruckter Figuren, rund oder eiförmig, dreieckig, rechteckig oder polygonal mit vier oder mehr Seiten, regelmäßig oder unregelmäßig, von verschiedenen Größen und mit verschiedenen Mengen oder Abständen zwischen den Figuren, in Übereinstimmung mit den Stärkebeschränkungen der Wärmeverschweißung und des Grafikdesigns, verwendet für das Aufdrucken von Werbung auf die Verpackung.

3. Verpackung für Papierbögen nach Anspruch 1, gekenntzeichnet, durch Erhalten eines Flexo- oder Rotogravuraufdrucks auf deren Innenseite, auf deren Außenseite oder auf beiden Seiten, in Übereinstimmung mit dem Druckgrafikdesign des Kunden, der die Papierbögen verpackt, und in Übereinstimmung mit der geltenden Umweltgesetzgebung des jeweiligen Landes.

4. Verpackung für Papierbögen nach Anspruch 1, **dadurch gekennzeichnet, dass** der Verpacker der Papierbögen verschiedene Verpackungsmaschinenmodelle verwendet, die bei verschiedenen Temperaturen und verschiedenen Wärmeverschweißungsgeschwindigkeiten betrieben werden können.

5. Verpackung für Papierbögen nach Anspruch 1, **gekennzeichnet durch** Aufnehmen von beliebigen geeigneten Mengen an Papierbögen, außer einem Ries.

## Revendications

1. Emballage pour feuilles de papier, telles que des feuilles destinées à être utilisées dans des bureaux, des domiciles, des centres graphiques, et analogues, qui peuvent avoir différentes tailles et qui peuvent être utilisées pour l'obtention de divers types de copies et analogues, ledit emballage étant sensiblement constitué d'une gaine (1) obtenue à partir d'un matériau non stratifié, adéquatement coupé, plié et thermiquement scellé, ledit emballage étant **caractérisé en ce qu'**il est sensiblement constitué d'une seule couche de film (10) en polypropylène biorienté, transparent ou coloré, brillant ou opaque, et coextrudée avec deux ou plus de deux couches extérieures en la même résine plastique (polypropylène), spécialement modifiée et dotée d'additifs pour une fusion à basse température (BOPP-LT), qui reçoivent une impression flexographique ou une impression par rotogravure de micropoints ayant une taille et une forme déterminées.

2. Emballage pour feuilles de papier selon la revendication 1, **caractérisé en ce qu'**il est ouvert d'une manière contrôlée, utilisant toujours la technique de limitation du soudage thermique avec l'application de dessins imprimés, ronds ou ovoïdes, triangulaires, carrés ou polygonaux à quatre faces ou plus, réguliers ou irréguliers, de diverses tailles, et avec différentes quantités d'espacements entre les dessins, en fonction des contraintes de résistance du soudage thermique et du motif graphique utilisé pour l'impression d'une propagande sur l'emballage.

3. Emballage pour feuilles de papier selon la revendication 1, **caractérisé par** la réception d'une impression flexographique ou par rotogravure sur la face intérieur de celui-ci, sur la surface extérieure de celui-ci, ou sur les deux faces, en fonction du motif graphique du client qui emballe les feuilles de papier, et en fonction de la législation environnementale du pays qui est applicable.

4. Emballage pour feuilles de papier selon la revendication 1, **caractérisé en ce que** l'emballeur des feuilles de papier utilise différents modèles de machine d'emballage, qui peuvent fonctionner à des températures différentes et à des vitesses de soudage thermique différentes.

5. Emballage pour feuilles de papier selon la revendication 1, caractérisé en qu'il contient n'importe quelles quantités adéquates de feuilles de papier, autres qu'une rame.
